# EUROPEAN PATENT APPLICATION

(11) **EP 1 274 190 A2**
(43) Date of publication of application: **08.01.2003**
(21) Application number: 02014519.9
(22) Date of filing: 01.07.2002
(51) Int. Cl.: H04J 3/06, H04L 12/413, B60R 16/02, H03L 7/00, G06F 1/04

(54) **Time synchronisation system and method**

(30) Priority: 02.07.2001 GB 0116018
(71) Applicant: MOTOROLA, INC., Schaumburg, IL 60196 (US)
(72) Inventor: Miller, Peter, Shefford, Bedfordshire SG17 5RY (GB)
(74) Representative: Potts, Susan Patricia

(57) **Abstract**

A time synchronisation system (4) and method for fault tolerant and time synchronisation distributed computing systems, for example, for use in automotive applications. The system (4) uses at least two nodes (2,3) in communication with at least one other node via a signal synchroniser (10), wherein each signal synchroniser detects frequency and phase errors in signals (28) generated from each oscillator (18) in the node (2,3), in comparison to the frequency and phase components of the received signal (20)generated by the oscillator (18) in the node sending the signal.

## Description

### FIELD OF THE INVENTION

The present invention relates generally to a time synchronisation system and method. More specifically, the invention relates to, for example, fault tolerant and time synchronisation distributed computing systems and methods.

### BACKGROUND OF THE INVENTION

In some distributed computing systems having multiple nodes, it is critical that certain events, such as voting, parts of a distributed control loop, to implement timeouts on transmissions between nodes of a distributed system, etc., occur simultaneously at each of the nodes. There are several techniques used to synchronise the occurrence of events between multiple nodes in distributed computing systems.

In systems using vast numbers of nodes, one technique commonly used involves a master clock to provide a global frequency to each node in the system. An example of such a system is the Internet's Network Time Protocol (NTP), which may achieve a proposed average of +/-15ns accuracy of time. However, to achieve fault tolerance, several global master clocks must be implemented, as in NTP. Additionally, as this technique does not provide phase locking, two events occurring at almost the same time is not achievable in such systems as NTP.

Another technique commonly used in distributed computing systems is known as the causality approaches, such as scalar, vector or matrix causality approaches, as discussed and described in Raynal, M. et al., Logical Time: Capturing Causality in Distributed Systems, IEEE Computer, February 1996. Causality approaches are typically used for, for example, for some distributed control systems, where actions must be done in a certain fixed order, but the actual time elapsed is not critical. The causality approaches are based on sequentially ordering of events passed sequentially from one node to another node. As the nodes in such systems based on the causality approaches do not share a global or master clock, unlike NTP, the transfer of information passed between nodes is inherently asynchronous, and the communication delay is finite and unpredictable. In addition to not providing time or frequency locking, this technique, similarly as discussed above with NTP, does not provide phase locking. Thus, like NTP, two events occurring at almost the same time is not achievable in these systems. Additionally, systems based on the causality approaches may not detect corrupted information passed from a faulty node.

Similarly, although phase lock loop (PLL) implementations are known, such as a digitally phase locking apparatus described in EP0318155, in such applications, there is no fault tolerance and a master or global clock is required.

Therefore, there is a need in the art for a time synchronisation system and method that provides frequency and phase locking mechanism at each node with error detection and correction capabilities.

### SUMMARY OF THE INVENTION

In accordance with the present invention there is provided a time synchronisation system as claimed in claim 1, and a method for a time synchronisation system as claimed in claim 5. Such a system may be arranged for use in an automotive application.

### BRIEF DESCRIPTION OF THE DRAWINGS

Preferred embodiments of the invention will now be more fully described, by way of example, with reference to the drawings, of which:
FIG. 1 is a schematic block diagram of a time synchronisation system and method according to an embodiment of the invention;
FIG. 2 is a schematic block diagram of a signal synchroniser according to an embodiment of the invention;
FIG. 3a is a signal-timing diagram illustrating initial frequency and phase errors in a system prior to correction according to an embodiment of the invention;
FIG. 3b is a signal-timing diagram illustrating subsequent frequency and phase error synchronisation in a system after correction according to an embodiment of the invention;
FIG. 4a is a graph illustrating frequency correction response to an initial frequency and phase error according to an embodiment of the invention;
FIG. 4b is a graph illustrating phase correction response to an initial frequency and phase error according to an embodiment of the invention;
FIG. 5a is a graph illustrating frequency correction response to an initial frequency and phase error according to an embodiment of the invention; and
FIG. 5b is a graph illustrating phase correction response to an initial frequency and phase error according to an embodiment of the invention.

### DETAILED DESCRIPTION OF THE PREFERRED EMBODIMENTS OF THE INVENTION

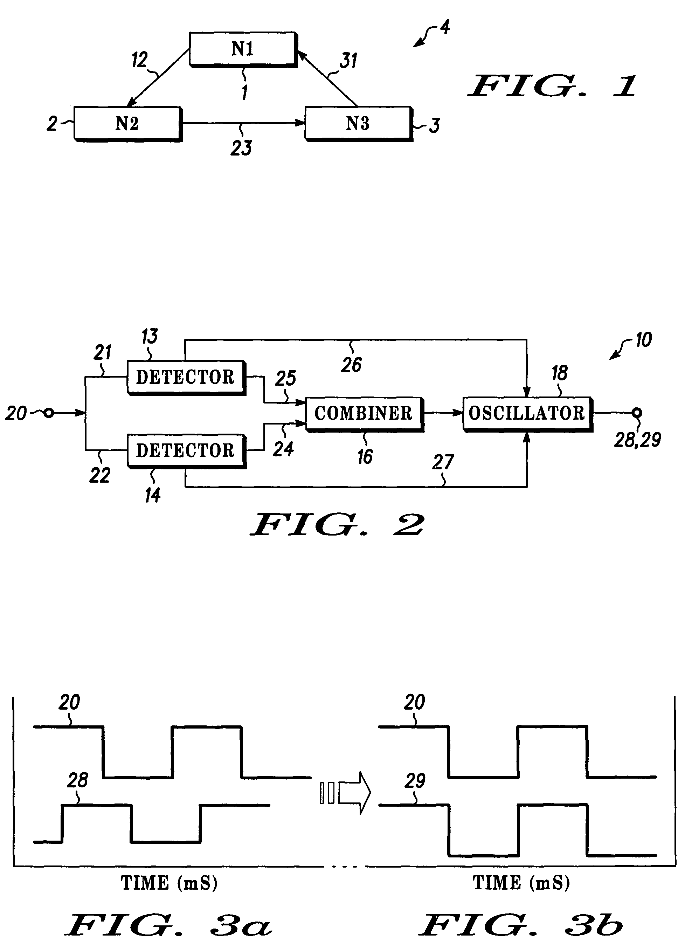

Referring to FIG. 1 in an embodiment of the invention, a time synchronisation method and system 4 is shown. The system shown is a three-node system, N1-N3 1-3, forming a single unidirectional ring. The nodes 1,2,3 communicate with each other in a counter clockwise ring via inter-nodal links 12,23,31. Of course the inter-nodal links in the system may be configured clockwise.

In FIG. 2, a signal synchroniser 10 is shown in an embodiment of the invention. Each node 1,2,3 comprises a signal synchroniser and receives a signal 20 from the adjacent node via nodal link 12,23,31. Upon reception of the signal 20, frequency and phase components of the signal 20 are analysed by frequency error detector and corrector 13 and phase error detector and corrector 14, respectively. The frequency and phase components are then sent via connection 24,25 to combiner 16, which combines the components to provide a combined signal to an oscillator 18. If an error in the frequency is detected within a predetermined error range, for example 1%, the difference is calculated and a frequency correction signal 26 is sent from the frequency error detector and corrector 13 to an oscillator 18. The oscillator 18 is adjusted to change the frequency in the corrected signal 28,29 to partially correct the error in accordance with the frequency error signal 26. The phase difference is also calculated and a phase correction signal 27, which partially corrects the error, is sent from the phase error detector and corrector 14 to an oscillator 18. The oscillator 18 is adjusted to change the phase in the corrected signal 28,29 in accordance with the phase error signal 27.

In another embodiment, if an error in the frequency is detected, then only a frequency correction signal 26 is sent to the oscillator 18 to adjust the frequency in the frequency corrected signal 28. This occurs on each pass until the frequency is with a predetermined acceptable range. As soon as the frequency is determined to be within an acceptable range, then a phase correction signal 27 is also transmitted to the oscillator to adjust the phase in the phase and frequency corrected signal 29.

FIGs. 3a and 3b show signal-timing diagrams illustrating initial frequency and phase errors in a system prior to and subsequent to correction, respectively, according to an embodiment of the invention. Signal 20 represents the signal generated by an oscillator in a previous node, for example with reference to FIG. 1, N1. Signals 29 and 30 represent the signal generated by an oscillator in the present node, for this example, N2. Specifically, signal 30 represents the signal generated by the oscillator in N2 with frequency and phase errors. After the signal components are analysed and the oscillator 18 is adjusted accordingly, the signal 29 is in frequency and in phase with the signal 20.

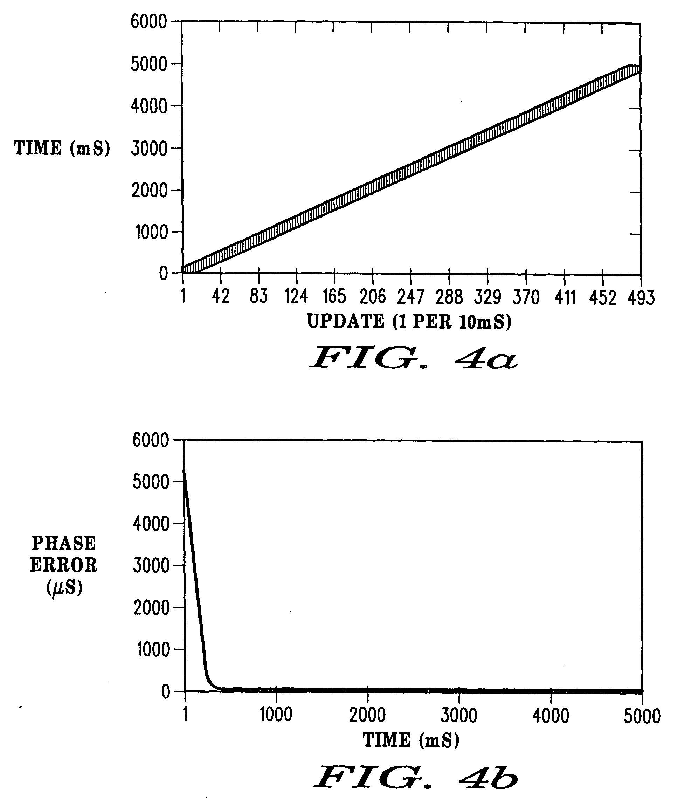

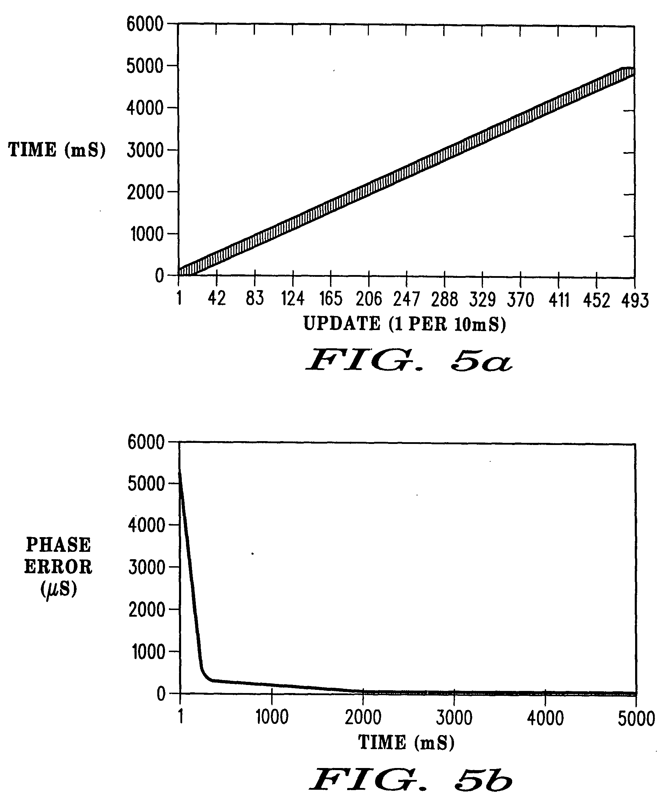

The system 4 having a signal synchroniser in each node, as discussed above and shown in FIGs. 1 and 2, has a response to detecting and correcting errors in the frequency and phase as show in FIGs. 4a, 4b, 5a, and 5b. The graphs in FIGs. 4a and 5a, illustrate the frequency correction response to two different initial frequency and phase error according to an embodiment of the invention. The graphs in FIGs. 4b and 5b illustrate the phase correction response to an initial frequency and phase error according to an embodiment of the invention.

In the graphs of FIG. 4a and 4b, the system 4 of three nodes shown in FIG. 1 had an initial 1% frequency error, basic 100Hz frequency, with one node with a 5ms initial phase error. In the graphs of FIG. 5a and 5b, the system 4 was set to the same initial settings with the link 31 between nodes N3 and N1 broken. It will be appreciated that the system 4 is fault tolerant and robust to any defects in inter-nodal links 12,23,31. Additionally, the embodiments of the invention discussed, a single fault such as due to a single faulty synchroniser will not crash the system or make the system fail.

It will be appreciated that the foregoing embodiments may be implemented in hardware and/or software. As an example, the same computations and functions may be performed at each node, where a fairly accurate local clock, for example 1% accuracy and 100 Hz (10 ms), may be used at each node. First the received signal, for example, as measured by this node using its local clock shown as receivedtimeperiod in the pseudo code below, is checked within a valid range, relative to the nodes local clock, where with a 1% accurate local clock the range may be +/-3%, where +/- 2% may be due to clock errors, and an extra 1% is allowed to correct phase errors when frequency may be at maximum difference. In this example, then if the receive time period is less than 9.7 or greater than 10.3, then the input is out of range, and this node will free run at its natural frequency. It will be appreciated that the pseudo code may work in terms of periods rather than frequencies (period = 1/frequency) as in most microprocessors, it may be easier and less difficult to measure and control periods.

If the period of the clock received from another node is within +/- 3% then the frequency and phase locked loops are enabled, for example, locked is set to 1 in the pseudo code set out below. If the phase error, as shown as phaseerorror in the pseudo code below, between this nodes output and the input received is < 5µs then both loops are locked, for example, locked is set to 2 in the pseudo code below. Both a frequency locked and phase locked loop is then applied to generate the output frequency, for example, shown as mytimeperiod in the pseudo code below, which is limited to +/- 2% of the nodes local clock before being output to another node.

An example of a pseudo code that may be implemented is as follows:

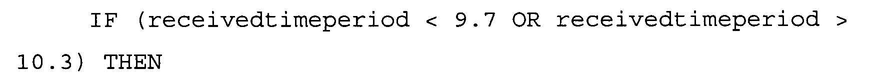

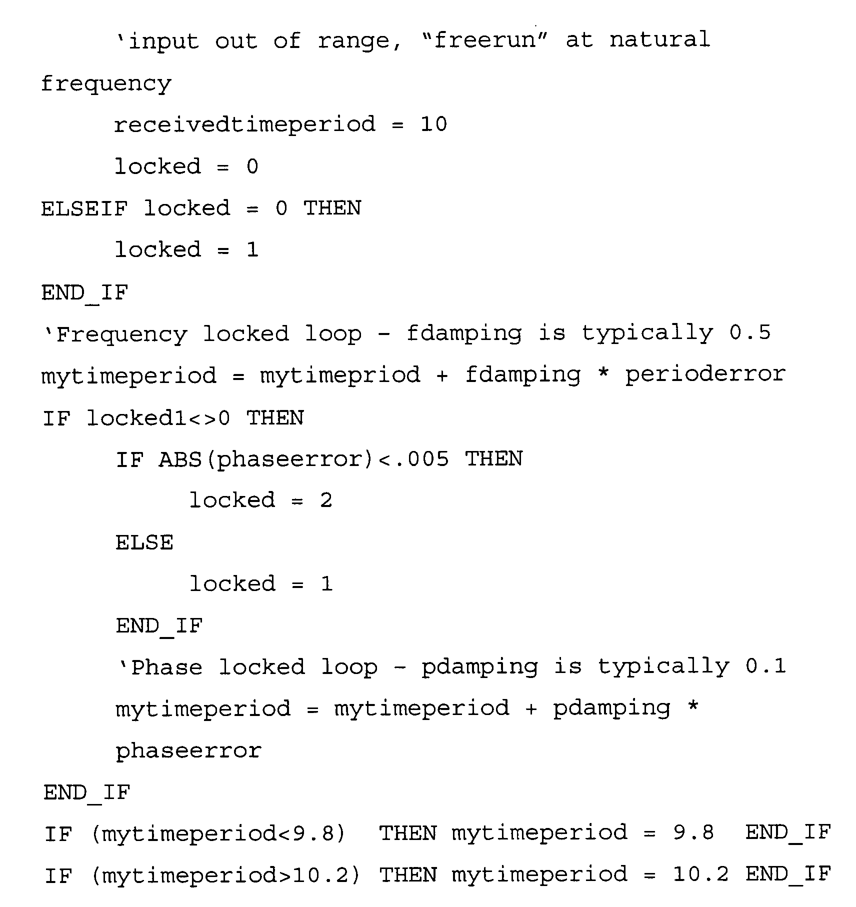

Although a three node single unidirectional ring system is shown and discussed herewith, it will be understood that this system may be implemented in any system having any number of nodes more than two nodes, and bi-directional and/or cross-directional ring. It will be appreciated that although the particular embodiments of the invention have been described above, various other modifications and improvements may be made by a person skilled in the art without departing from the scope of the appended claims.

## Claims

1. A time synchronisation system (4) for use in a distributed computing system, the time synchronisation system comprising:
at least two nodes (2,3), each node in communication with at least one other node via a signal synchroniser (10)in each node (2,3), each signal synchroniser (10) configured to analyse frequency and phase components of a received signal (20) from another node (2,3) to detect an error in accordance with a predetermined range in the frequency and phase components of a signal generated (28) by an oscillator (18) in the node (2,3) and to adjust the frequency and phase components of the generated signal (28).

2. A time synchronisation system (4) as claimed in claim 1 wherein the signal synchroniser (10) further comprises a frequency error detector and corrector (13) and a phase error detector and corrector (14) for receiving the received signal (20) and for detecting errors in the frequency and phase to correct, and a combiner (16) to combine signals from the frequency and phase error detector and correctors (13,14) to the oscillator (18) in the node (2,3) for adjusting the frequency and phase components of the generated signal (20).

3. A time synchronisation system (4) as claimed in claim 1 or 2 wherein the system comprises three nodes (1,2,3).

4. A time synchronisation system (4) as claimed in any preceding claim wherein the system is arranged for use in an automotive application.

5. A method for a time synchronisation system comprising the steps of:
providing a distributed computing system (4) comprising at least two nodes (2,3), each node in communication with at least one other node via a signal synchroniser (10) in each node;
analysing the frequency and phase components at each signal synchroniser (10) of a received signal (20) from another node;
detecting an error in accordance with a predetermined range in the frequency and phase components of a signal (28) generated by an oscillator (18) in the node; and adjusting the frequency and phase components of the generated signal (28).

6. A method for a time synchronisation system (4) as claimed in claim 5 wherein the detecting step further comprises providing the signal synchroniser (10) with a frequency error detector and corrector (13) and a phase error detector and corrector (14) for receiving the received signal (20) and detecting errors in the frequency and phase to correct, and a combiner (16) to combine signals from the frequency and phase error detector and correctors (13,14) to the oscillator (18) in the node (2,3) for adjusting the frequency and phase components of the generated signal (28).

7. A method for a time synchronisation system as claimed in claim 4 or 5 wherein the providing a distributed computing system step comprises providing a system having at least three nodes (1,2,3).

8. A method for a time synchronisation system as claimed in claims 4, 5 or 6 wherein the method is arranged for use in an automotive application.
